# EUROPEAN PATENT APPLICATION

(11) **EP 4 721 895 A1**
(43) Date of publication of application: **08.04.2026**
(21) Application number: 25206241.9
(22) Date of filing: 02.10.2025
(51) Int. Cl.: B21K 25/00, B21D 39/04, B23P 11/02, F16L 13/14

(54) **METHOD AND SYSTEM FOR JOINING PIPE**

(30) Priority: 07.10.2024 US 202463704089 P
(71) Applicant: Cheng, Paul Po, London ON N6A 3S9 (CA)
(72) Inventor: Cheng, Paul Po, London ON N6A 3S9 (CA)
(74) Representative: Murgitroyd & Company

(57) **Abstract**

The disclosure is directed at a method and system for joining pipe. The disclosure includes a coupler that includes a main and an engagement portion. The pipe includes an end portion that has a second heated part. A coupler heated part within the engagement portion is heated to a first hot working temperature while the second heated part is heated to a second hot working temperature. The coupler is then engaged with the pipe and one or both are subjected to an engagement motion to engage the heated parts.

## Description

### CROSS-REFERENCE TO OTHER APPLICATIONS

The disclosure claims priority from US Provisional Application No. 63/704,089 filed October 7, 2024 which is hereby incorporated by reference.

### FIELD OF THE DISCLOSURE

The disclosure is generally directed at metalworking and, more specifically, at a method and system for joining pipe.

### BACKGROUND OF THE DISCLOSURE

In the prior art, an outer diameter of a thin-walled pipe may be covered by a composite material, in order to provide structural strength. The thin-walled pipe may be axially joined to another thin-walled pipe by a coupler device.

The prior art coupler device is usually secured inside the pipe at an end of the pipe, by conventional welding methods.

However, the conventional welded connection between the coupler and the thin-walled pipe is prone to failure. In particular, where the coupler is welded to the pipe using conventional methods, then a heat-affected zone ("HAZ") is created, which is weaker than the material surrounding it.

Conventional welds tend to create protrusions extending past the design inner diameter, which reduce drift size. In a pipe with a relatively small inner diameter, the reduction can be significant. Also, where fluid is to flow through the pipe, protrusions from conventional welding result in turbulent flow.

In addition, the known coupler devices are usually formed to fit inside the inner diameter of the pipe, i.e., the conventional coupler's inner diameter is smaller than the pipe's inner diameter. This arrangement is undesirable because non-alignment of the inner diameter of the coupler with the inner diameter of the pipe creates turbulent flow in a fluid moving through the pipe and/or restricts drift diameter.

Therefore, there is provided a novel method and system for joining pipe.

### SUMMARY OF THE DISCLOSURE

For the foregoing reasons, there is a need for a method and system for joining pipe that overcomes or mitigates one or more of the defects or deficiencies of current practice.

In its broad aspect, the disclosure provides a method of joining pipe in which a coupler has a body with a main portion and an engagement portion that is formed to fit over an end portion of the pipe. In some embodiments, the body includes a number of fins positioned on, integrated with or part of the engagement portion for at least partial engagement with the end portion. One or more heating elements are provided, for heating a first heated part of the engagement portion to a first hot working temperature and for heating a second heated part of the end portion to a second hot working temperature. When they are at their respective hot working temperatures, the first and second heated parts are plastically deformable.

The coupler and the end portion are covered with an inert atmosphere, and the heating elements are energized, to heat the first and second heated parts to their respective hot working temperatures.

One or both of the coupler and the pipe are subjected to a translocation motion, to move the engagement portion onto the end portion. Also, one or both of the coupler and the pipe are subjected to an engagement motion, in which one or both of the coupler and the pipe are moved radially relative to the other. The coupler is urged against the end portion, to join the coupler with the pipe.

**In** one aspect of the disclosure, there is provided a method including providing at least one pipe, said at least one pipe including an end portion at an end of said at least one pipe; providing a coupler including a body, the body including a main portion; and an engagement portion formed to fit over the end portion, the body including a plurality of fins positioned on the engagement portion; providing an inert atmosphere covering the coupler and the end portion; energizing at least one heating element to heat a first heated part of the engagement portion to a first hot working temperature and at least one second heated part to a second hot working temperature; subjecting one or both of the coupler and said at least one pipe to a translocation motion, to move the engagement portion onto the end portion; subjecting one or both of the coupler and said at least one pipe to an engagement motion, in which one or both of the coupler and said at least one pipe move radially relative to the other; and urging the coupler against the end portion, to join the coupler to said at least one pipe.

**In** another aspect of the disclosure, there is provided a method including heating a coupler heated part of a coupler to a first hot working temperature in an inert atmosphere; heating a pipe heated part of a pipe to a second hot working temperature in the inert atmosphere; and subjecting one or both of the coupler and the pipe to a translocation motion and an engagement motion to engage the coupler heated part of the coupler and the pipe heated part of the pipe.

In another aspect, heating a coupler heated part of a coupler to a first hot working temperature in an inert atmosphere includes heating a set of fins to the first hot working temperature in the inert atmosphere. In a further aspect, heating a coupler heated part of a coupler to a first hot working temperature in an inert atmosphere includes heating an intermediate component to the first hot working temperature in the inert atmosphere. In yet another aspect, the engagement motion includes a rotational motion.

In another aspect of the disclosure, there is provided a coupler for use in joining pipe including a main body portion; and an engagement portion wherein the engagement portion includes a coupler heated part which is heated to a first hot working temperature for engaging the engagement portion with the pipe.

In another aspect, the engagement portion includes a set of fins. In yet another aspect, the engagement portion further includes an intermediate component.

Accordingly there is provided a method and a coupler as detailed in the claims as follows.

### BRIEF DESCRIPTION OF THE DRAWINGS

The disclosure will be better understood with reference to the attached drawings, in which:
Fig. 1 is a longitudinal cross-section of an embodiment of a coupler and a cladded pipe;
Fig. 2 is a longitudinal cross-section of the coupler of Fig. 1 with a portion of the cladding on the pipe removed, to expose an end portion of the pipe;
Fig. 3 is a longitudinal section of the coupler and the pipe of Fig. 2 in which an engagement portion of the coupler is engaged with the end portion of the pipe;
Fig. 4 is a longitudinal section of an alternative embodiment of a coupler, positioned for engagement with respective end portions of first and second pipes;
Fig. 5 is a longitudinal section of the coupler and the first and second pipes of Fig. 4 in which the coupler is engaged with the respective end portions of the first and second pipes;
Fig. 6 is a longitudinal section of another alternative embodiment of a coupler, positioned for engagement with respective end portions of first and second pipes;
Fig. 7 is a longitudinal section of the coupler and the first and second pipes of Fig. 6 in which the coupler is engaged with the respective end portions of the first and second pipes;
Fig. 8 is a longitudinal section of another alternative embodiment of a coupler, positioned for engagement with respective end portions of first and second pipes;
Fig. 9 is a longitudinal section of the coupler and the first and second pipes of Fig. 8 in which the coupler is engaged with the respective end portions of the first and second pipes;
Fig. 10 is a longitudinal section of first and second pipes and an intermediate pipe positioned therebetween and couplers positioned for engagement with the first and second pipes and the intermediate pipe, drawn at a smaller scale;
Fig. **11** is a longitudinal section of the first and second pipes and the intermediate pipe of Fig. 10, engaged with each other and with the couplers;
Fig. 12 is a longitudinal section of a pre-formed junction element and couplers for joining pipes to the junction element;
Fig. 13 is a longitudinal section of the pre-formed junction element and couplers of Fig. 12, engaged with each other;
Fig. 14 is a part of a longitudinal section of first and second pipes showing another embodiment of the coupler joining the pipes, drawn at a larger scale;
Fig. 15 is a part of a longitudinal section of another embodiment of a coupler positioned to be engaged with an end portion of a pipe; and
Fig. 16 is a part of a longitudinal section of yet another embodiment of a coupler positioned to be engaged with an end portion of a pipe.

### DETAILED DESCRIPTION

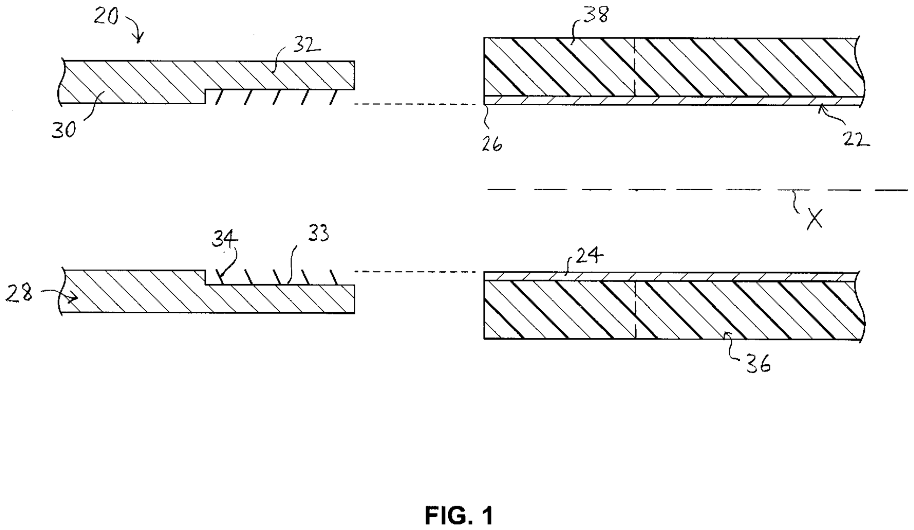

In the attached drawings, like reference numerals designate corresponding elements throughout. Reference is first made to Figs. 1-3 to describe an embodiment of a method and system of the disclosure.

As will be described, in one embodiment, as shown in Fig. 1, which is a longitudinal cross-section of an embodiment of a coupler and a cladded pipe, the method of the disclosure is for joining a coupler 20 to a pipe 22. The pipe 22 has an end portion 24 located at an end 26 of the pipe 22. The pipe 22 defines an axis "X" thereof. As can be seen in Fig. 1, the coupler 20 is initially positioned so that it is coaxial with the pipe 22 to facilitate engagement between the coupler 20 and the pipe 22.

It will be understood that the pipe 22 and the coupler 20 of Fig. 1 are round in cross-section, however, other shaped pipes and couplers may be contemplated.

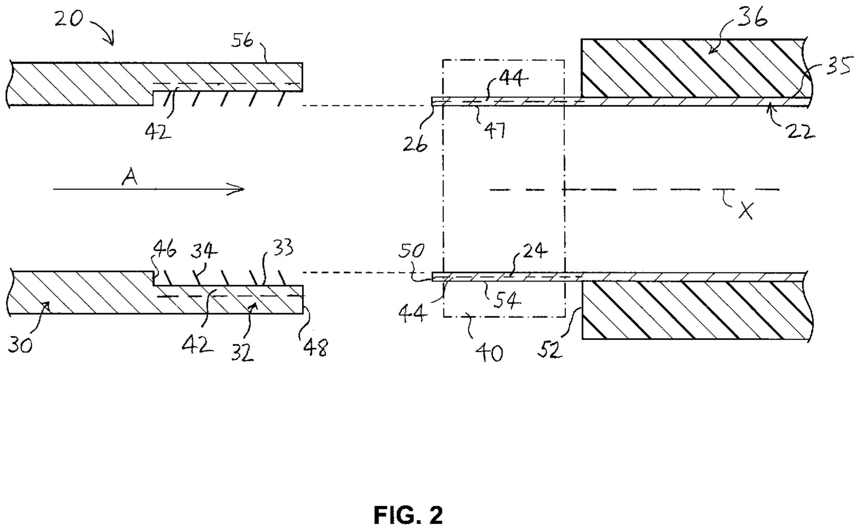

In one embodiment, the coupler 20 includes a body 28 with a main portion 30 and an engagement portion 32 formed to fit over the end portion 24 (as schematically shown in Fig. 2). The engagement portion 32 includes a wall segment 33 and a set or number of fins 34 positioned on the wall segment 33. As will be described below, the set of fins 34 are used for at least partial engagement of the coupler 20 with the end portion 24 of the pipe 22. In one embodiment, the set of fins 34 are made of the same material as the coupler and may be cut out from coupler 20.

Those skilled in the art would appreciate that, in Fig. 1, the pipe 22 is shown covered on its outer surface 35 (as labelled in Fig. 2) by a composite material 36. As can be seen in Figs. 1 and 2, in one embodiment, a part 38 (Fig. 1) of the composite material 36 is removed (Fig. 2), in order that the outer surface 35 of the end portion 24 may be free of the composite material, so that the coupler 20 may be joined to the pipe 22 at the end portion 24. For clarity of illustration, the part 38 of the composite material 36 that is to be removed is partly shown in dashed outline in Fig. 1.

Alternatively, when manufacturing the pipe 22, the composite material 36 may be formed on the pipe's outer surface 35 so that the outer surface 35 of the end portion 24 is exposed without needing to remove the composite material 36 post-manufacture.

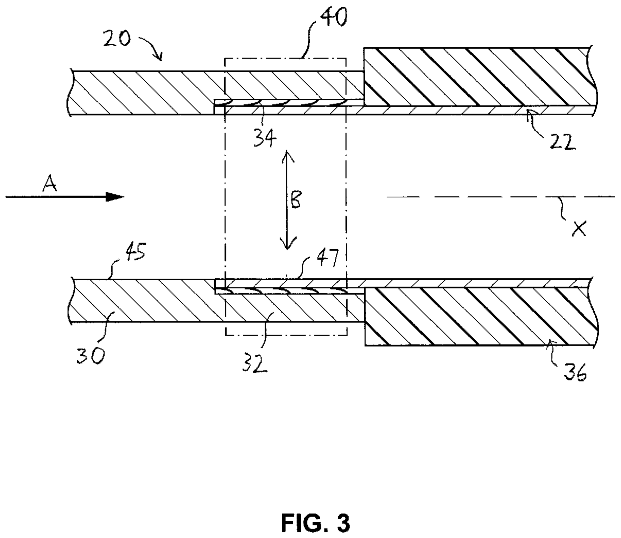

As can be seen in Figs. 2 and 3, one or more heating elements 40 are provided for heating a part or portion 42, which may be seen as a coupler heated part or first heated part, of the engagement portion 32 to a first hot working temperature such as when the coupler 20 is in contact with the pipe 22. In other embodiments, the one or more heating elements 40 may heat the first heated part just prior to contact between the coupler 20 and the pipe 22. The one or more heating elements 40 are also used for heating a part or portion 44, which may be seen as a pipe heated part or a second heated part, of the end portion 24 to a second hot working temperature. In some embodiments, the heating element(s) are configured for heating the first 42 and second 44 heated parts by induction. In the current disclosure, the hot working temperatures are below the melting temperature of the metal that is heated, and sheared (as will be described), and because of this, a heat-affected zone ("HAZ") is reduced or avoided entirely. As will be described, when the metal is at the hot working temperature, the metal is subject to plastic deformation.

It will be understood that, as illustrated in Fig. 2, the thicknesses of the first and second heated parts 42, 44 are exaggerated, for clarity of illustration.

During heating, an inert atmosphere (not shown) is provided, which covers the engagement portion 32 of the coupler 20 and the end portion 24 of the pipe 22. Those skilled in the art would be aware of suitable gases which may be used as the inert atmosphere, and also of suitable devices for containing the inert atmosphere. For clarity of illustration, the inert atmosphere and devices for containing the inert atmosphere are omitted from the drawings.

When the coupler 20 is located coaxially relative to the pipe 22, an inner surface 45 of the main portion 30 of the coupler 20 is aligned with an interior surface 47 of the end portion 24 of the pipe 22 (Fig. 3).

In one embodiment, once the coupler 20 is so located relative to the end portion 24, the one or more heating elements 40 are energized, for heating the first and second heated parts 42, 44 to the first and second hot working temperatures respectively. In one embodiment, the coupler 20 and the pipe 22 are made of the same metal and the first and second hot working temperatures are the same, or substantially the same, temperature. However, in an alternative embodiment, the coupler 20 and the pipe 22 may be made of different metals, and the first and second hot working temperatures may be different.

As schematically illustrated in Fig. 2, the heating element(s) 40 may be formed to fit around an outer diameter of the end portion 24, to heat the second heated part 44. It will be understood that, for clarity of illustration, only one heating element 40 is illustrated in Figs. 2 and 3. In the situation illustrated in Fig. 2, if convenient, a second heating element (not shown in Fig. 2) may be positioned inside the coupler 20, so that the heating element, when energized, will heat the first heated part 42 of the engagement portion 32. Along with the first heated part, the heating elements 40 may also heat the fins 34 to their hot working temperature. **In** other embodiments, a heating element intended for heating the first heated part 42 may be positioned outside the coupler 20, i.e., proximal to an outer surface 56 of the coupler 20.

Those skilled in the art would appreciate that locating a heating element 40 inside the coupler 20 may not be practicable, for example, if removal of the heating element 40 after the coupler 20 and the pipe 22 are heated, engaged or joined is difficult.

As can be seen in Fig. 2, the second heated part 44 extends from the exterior surface 35 of the end portion 24 inwardly, i.e., toward the interior surface 47. Accordingly, the first heated part 42 is formed so that it engages the second heated part 44, when the engagement portion 32 of the coupler 20 is engaged with the end portion 24 of the pipe 22.

**In** Fig. 2, it can be seen that the heating elements 40 that are positioned for heating the second heated part 44 are located outside the end portion 24. In practice, the heating elements 40 that are positioned outside the end portion 24 may be provided in one or more segments that are assembled around the end portion 24 so that they may substantially uniformly heat the second heated part 44. Once the coupler 20 and the end portion 24 are joined, the segments of the heating element(s) may then be disassembled, for removal thereof.

**In** one embodiment, once the first and second heated parts 42, 44 are at their respective hot working temperatures, one or both of the coupler 20 and the pipe 22 are subjected to a translocation motion, to move the engagement portion 32 onto the end portion 24. For instance, if only the coupler 20 is subjected to the translocation motion, then the coupler 20 is moved in the direction indicated by arrow "A" in Figs. 2 and 3. In some embodiments, the first 42 and second 44 heated parts may also be in contact prior to heating and depending on their respective locations, there may not be a need for a translation motion for a low level of translocation motion. This is described in more detail below.

While one or both of the coupler 20 and the pipe 22 are subjected to the translocation motion, one or both of the coupler 20 and the pipe 22 are also subjected to an engagement motion, in which one or both of the coupler 20 and the pipe 22 are moved radially (i.e., about the axis "X") relative to the other. In one embodiment, the engagement motion commences upon engagement of the first heated part 42 with the second heated part 44. For convenience, the direction of the engagement motion is schematically indicated by arrow "B" in Fig. 3. The translocation motion may continue until the engagement portion 32 engages the composite material 36. In one embodiment, after the engagement portion 32 engages the composite material 36, the coupler 20 is no longer urged in the direction indicated by arrow "A", and the coupler 20 is subjected to the engagement motion, until the first 42 and second 44 heated parts are joined together.

It will be understood that various arrangements may be suitable. For example, the engagement motion may commence prior to the translocation motion. Alternatively, the engagement motion and the translocation motion may commence at substantially the same time.

In one embodiment, the first and second heated parts are at their respective hot working temperatures when the translocation motion and/or the engagement motion begin. While the first and second heated parts 42, 44 are at the first and second hot working temperatures respectively, they are softened relative to their hardness and rigidity at ambient temperature. When the first and second heated parts 42, 44 are at the first and second hot working temperatures, they are plastically deformable.

Depending on the positions and/or structure of the heating elements 40, they may remain in position, and continue to heat the first 42 and/or second 44 heated parts, after the first and second heated parts are engaged. However, those skilled in the art would appreciate that it may be more convenient to remove one or all of the heating elements shortly before engagement.

As noted above, the first and second heated parts 42, 44 are subjected to the engagement motion when they are engaged. It is believed that the microstructure of the first and second heated parts is sheared due to the engagement of the first and second heated parts while at the first and second hot working temperatures respectively. Due to shearing, a reworked, fine-grained microstructure is formed in the first and second heated parts joining or bonding the first 42 and second 44 heated parts together.

The shearing results from the engagement motion experienced while the first and second heated parts 42, 44 are at their respective hot working temperatures, and engaged. It will be understood that the temperatures of the first and second heated parts 42, 44 rapidly decrease to temperatures below their respective hot working temperatures after engagement (if the heating elements are removed shortly prior to engagement). Once the temperatures of the first and second heated parts 42, 44 are below their respective hot working temperatures, the engagement motion ceases, and the coupler 20 is no longer urged (translocation motion) in the direction indicated by arrow "A". In some embodiments, the engagement motion ceases when the force (torque) required to cause the engagement motion rapidly increases.

It can be seen in Fig. 2 that the main portion 30 includes a main portion mating face 46 and the engagement portion 32 includes an engagement portion face 48. As can be seen in Figs. 2 and 3, when the engagement portion 32 is fully engaged with the end portion 24, the main portion mating face 46 abuts an end face 50 of the end portion 24 of the pipe 22. The engagement portion face 48 preferably does not engage a composite material end face 52 that partially defines the end portion 24, but instead is spaced apart therefrom, when the engagement portion 32 and the end portion 24 are engaged with each other.

As noted above, the set of fins 34 are positioned proximate the first heated part 42 or cut out from the coupler 20. When the engagement portion 32 is heated, the fins 34 are heated to their hot working temperature thereof so that they are plastically deformable. When the engagement portion 32 is engaged with the end portion 24, the fins 34 are generally bent away from the direction of travel of the coupler 20 (i.e., they are generally bent away from the direction indicated by arrow "A") and are squeezed substantially flat between the wall segment 33 and the end portion 24 (Fig. 3).

It will be understood that, as illustrated in Fig. 3, a gap "G" that is shown between the wall segment 33 and the outer surface 35of the end portion 24 is exaggerated, for clarity of illustration. Also, only a small number of fins 34 of exaggerated size are shown in Figs. 2 and 3, to simplify the illustrations. It is understood that the set of fins 34 may include more or less fins than shown.

The engagement portion 32 is formed so that, once the first and second heated parts 42, 44 are engaged, the wall segment 33 and the outer surface 35 of the end portion 24 define the predetermined gap "G" therebetween. In other words, the engagement portion 32 and the end portion 24 are formed to cooperate, when engaged, to define the gap "G" so that it will be sufficiently large to receive the set of fins 34, when the fins are deformed as schematically illustrated in Fig. 3. As will be described, it is preferred that the set of fins 34, once deformed, will substantially fill the gap "G". It will be understood the lengths of the engagement portions and the end portion 46 and 50 also form a bond and seal

Furthermore, the fins 34, once positioned between the wall segment 33 and the end portion 24, will also at least partly fill any openings that may form between the main portion mating face 46 and the end face 50 of the pipe, when the coupler 20 and the pipe 22 are brought together.

**In** some embodiments, once the engagement portion 32 is engaged with the end portion 24 of the pipe 22, the heating element(s) continue to heat the first and second heated parts 42, 44, i.e., while the coupler 20 is urged in the direction indicated by arrow "A" (translocation motion), and while the engagement motion continues, until the coupler 20 and the end portion 24 are joined together. When the first and second heated parts 42, 44 are securely joined together, the engagement motion ceases, and the heating element(s) are deenergized and/or removed. **In** practice, when the force required to move one or both of the first and second heated parts 42, 44 relative to the other rapidly increases, the engagement motion ceases and the pressure urging the coupler 20 in the direction indicated by arrow "A" is removed.

Subsequently, the remaining heating elements can then be removed.

Once the coupler 20 and the pipe 22 are securely joined together, a fluid-tight joint is provided therebetween (Fig. 3). Also, the inner diameters of the coupler 20 and the pipe 22 are preferably aligned, as shown in Fig. 3 to reduce the likelihood or prevent the turbulent flow of liquid within the pipe. Those skilled in the art would appreciate that it is preferred that the main portion mating face 46 and the end face 50 fit together so as to leave no spaces, or substantially no spaces, therebetween, to be fluid-tight, or substantially fluid-tight. **In** some embodiments, the main portion mating face 46 and the end face 50 may not cooperate to form a fluid-tight seal therebetween, however, the deformed set of fins 34 provide a fluid-tight seal between the end portion's outer surface 35 and the wall segment 33. The fins 34 also provide stability to the connection between the coupler and the pipe.

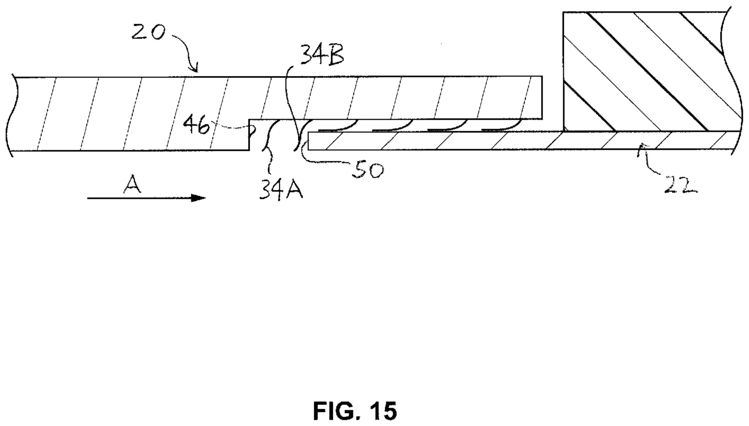

**In** an alternative embodiment as schematically illustrated in Fig. 15, some of the fins in the set of fins 34 that are proximal to the main portion mating face 46 may be somewhat longer than the other fins in the set of fins 34. **In** the specific embodiment of Fig. 15, two fins that are proximal to the main portion mating face 46 are identified for convenience by reference characters 34A and 34B as being longer than the other fins in the set of fins.

**In** Fig. 15, the coupler 20 and the pipe 22 are shown shortly before the main portion mating face 46 of the coupler 20 and the end face 50 of the pipe 22 are engaged.

As can be understood from Fig. 15, when the coupler 20 and the pipe 22 are engaged, the fins 34A, 34B are pushed against the main portion mating face 46 and the wall segment 33, and are also squeezed between the main portion mating face 46 and the end face 50. When heated to the their hot working temperature, the somewhat longer fins 34A, 34B are plastically deformed, and fill any openings between the main portion mating face 46 and the end face 50, when the coupler 20 is engaged with the end portion 24 of the pipe 22.

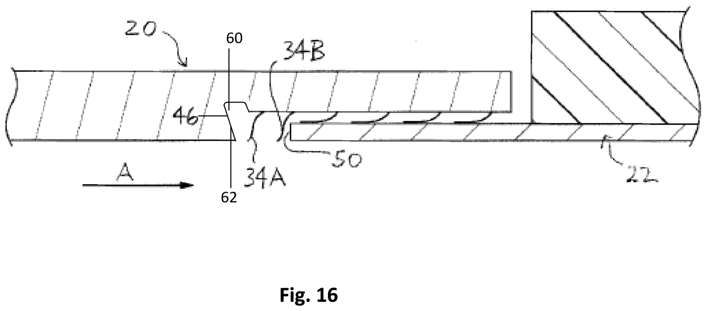

**In** some embodiments, as shown in Figure 16, the coupler 20 may include a pocket or notch 60 proximate the main portion mating face 46. When engaged, a slope 62 of the pocket 60 or main portion mating face 46 urges the end face 50 of the pipe 22 to curve into the coupler thereby reducing flash proximate the connection between the coupler 20 and the pipe 22. This may also provide an additional seal between the coupler 20 and the pipe 22.

Flash, or flash material, is usually considered excess material (or metal) that has to be cleaned and/or removed after welding. In some scenarios, the flash remains proximate the weld site. However, in the current disclosure, by pushing the end portion 50 into the sloped pocket 60 and then into a cavity, the flash material can provide extra hold for the weld or engagement between the coupler 20 and the pipe 22. Due to the use of induction heating of the first and second heated parts to their respective hot working temperatures, and the subsequent shearing (twisting) action, the curled end portion 50 will nest into the cavity and form to the shape of the cavity or pocket 60. As taught above, this may also provide additional protection against leakage and a stronger hold between the coupler 20 and the pipe 22. This may be seen as a complement to the fins 34 in providing a tighter seal. The slope 62 is used to encourage the end portion 50 of the pipe 22 to flare and curl into and towards the cavity, thereby reducing flash at the inside of the pipe 22. The cavity weld provides further protection after separation of the coupler and pipe after engagement and may provide an additional barrier against fluid entering the pipe 22. This is more important when there is corrosive material within the pipe.

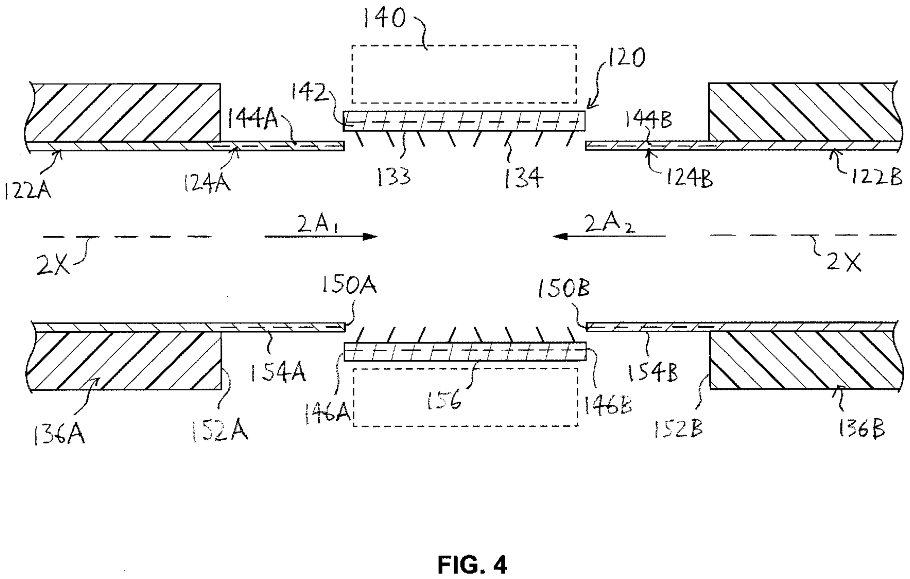

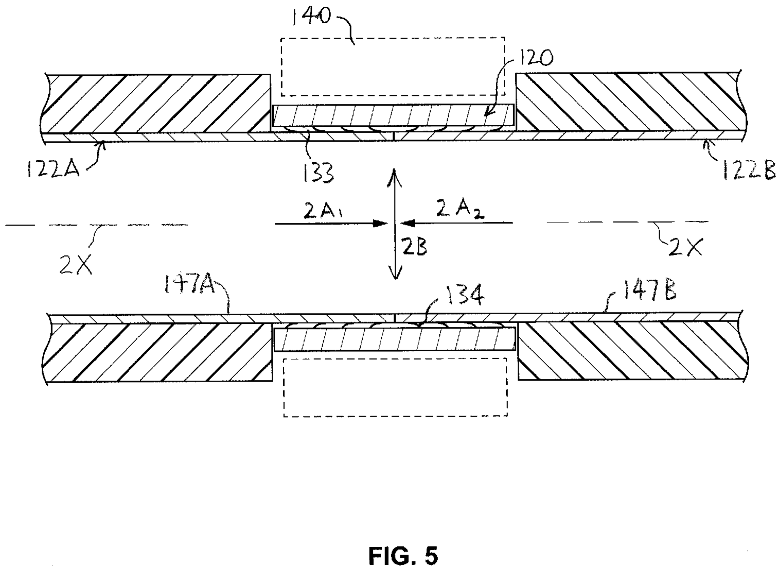

In another embodiment, as illustrated in Figs. 4 and 5, a coupler 120 includes a wall segment 133 with a set or number of fins 134 mounted to or part of the wall segment 133. In the current embodiment, the coupler 120 is intended to join two pipes 122A, 122B with composite material 136A, 136B secured thereon respectively. The pipes 122A, 122B are positioned coaxially with respect to each other, and the pipes 122A, 122B define an axis "2X" thereof. In the current embodiment, the coupler 120 is also positioned coaxially relative to the pipes 122A, 122B.

The composite material 136A, 136B on the pipes 122A, 122B may be formed in any suitable manner, so that exterior surfaces 154A, 154B of a portion of the pipes 122A, 122B, such as the respective end portions 124A, 124B are exposed (Fig. 4). As outlined above, the end portions 124A, 124B may initially be covered by composite material 136A, 136B that is subsequently removed from the end portions 124A, 124B to expose the end portions 124A and 124B, or alternatively, the composite material may have been formed on the pipes 122A, 122B so as to leave the exterior surfaces 154A, 154B of the end portions 124A, 124B exposed. As can be seen in Fig. 4, the composite material 136A on the pipe 124A has an end face 152A thereof, and the composite material 136B on the pipe 124B has an end face 152B thereof.

The heating element(s) 140 may be positioned inside or outside the coupler 120 and/or inside or outside the pipes 122A, 122B, depending on the most practical solution. For instance, if practicable, one heating element (not shown in Figs. 4, 5) may be located inside the coupler 120, for heating a portion, seen as a coupled heated part or a first heated part 142, of the coupler directly such as, but not limited to by induction. The heating elements are also used to heat a portion, seen as a pipe heated part or a second heated part 144A, 144B, of the pipes 122A, 122B. Depending on the positions of the heating elements, they may remain in position and continue to heat the first and second heating parts, before or after the first and second heating parts are engaged.

Alternatively, as can be seen in Fig. 4, the first heated part 142 of the coupler 120 may be heated by a heating element 140 that is positioned proximal to an outer surface 156 of the coupler 120. In the current embodiment, the first heated part 142 includes a set of fins 134. As can be seen in Figs. 4 and 5, positioning a heating element outside the coupler 120 has the advantage that the heating element 140 may be easily removed, after the pipes 122A and 122B and the coupler 120 have been joined.

It will be understood that, for clarity of illustration, not all of the heating elements for heating the first and/or second heated parts 144A, 144B are shown in Figs. 4 and 5.

Those skilled in the art would appreciate that, where the heating elements are positioned proximal to the outer surface 156 of the coupler 120 and/or the exterior surfaces 154A, 154B of the pipes 122A, 122B, the heating elements 140 may be provided in segments that each define a portion of a circle. In one example, the heating elements 140 may be provided substantially in semi-circular shapes, so that they may conveniently be put into position proximal to the outer surface 156 and/or the exterior surfaces 154A, 154B prior to heating, and subsequently easily removed after heating.

It will be understood that, in some embodiments, the one or more heating elements 140 are positioned so that, when energized, the heating elements 140 heat the first heated part 142 of the coupler 120 and second heated parts 144A, 144B of the respective pipes 122A, 122B, both before and after the coupler 120 and the end portions 124A, 124B are engaged.

In one embodiment, as schematically shown in Fig. 4, the first heated part 142 of the coupler 120 is heated by the one or more heating elements 140 before the coupler 120 is engaged with one or both of the end portions 124A, 124B. Once the first heated part 142 (including the set of fins 134) is at the first hot working temperature, the first heated part 142 is plastically deformable.

The second heated parts 144A, 144B are also heated to their hot working temperatures by energized heating elements (not shown in Fig. 4). As noted above, if feasible, the heating elements for heating the second heated parts 144A, 144B to their hot working temperatures are positioned outside the end portions 124A, 124B.

During heating of the first 142 and second heated parts 144A, 144B to their respective hot working temperatures, the first heated part 142 and the second heated parts 144A, 144B are covered by a suitable inert atmosphere (not shown) in any suitable manner, and immediately thereafter. Those skilled in the art would be aware of suitable gases that can be used to provide or create the inert atmosphere, and of suitable devices for containing the inert atmosphere. Devices for containing the inert atmosphere are omitted from the drawings for clarity of illustration.

Once the first heated part 142 and the second heated parts 144A, 144B are at the first and second hot working temperatures respectively, one or both of the pipes 124A, 124B are subjected to a translocation motion towards the coupler 120, to engage the second heated parts 144A, 144B of the pipes 122A, 122B with the first heated part 142 of the coupler 120.

As can be seen in Fig. 5, once the first heated part 142 is fully engaged with the respective second heated parts 144A, 144B, the coupler's mating faces 146A, 146B do not engage the respective composite material end faces 152A, 152B (Fig. 4), but are spaced apart therefrom.

The translocation motion of the pipes 122A, 122B is schematically represented by arrows "2A₁" and "2A₂" in Fig. 4. Either before or after engagement of the first 142 and second 144A, 144B heated parts, one or all of the coupler 120 and the pipes 122A, 122B are subjected to engagement motions, in which one or all of the coupler 120 and the pipes 122A, 122B are moved relative to each other. For example, when the coupler 120 is subjected to an engagement motion, it may rotate or oscillate about the axis "2X" after the coupler 120 and the pipes 122A, 122B are engaged. Such motion may also take place before or during the translocation motion. The direction of the engagement motion is schematically indicated by arrow "2B" in Fig. 5.

Once engagement has commenced, the pipes 122A, 122B are urged in the directions indicated by arrows "2A₁", "2A₂" respectively. It will be understood that the first heated part 142 and the second heated parts 144A, 144B are heated both before and after engagement, if feasible, depending on how the heating elements are positioned.

The microstructures of the first heated part 142 and second heated parts 144A. 144B are sheared due to the engagement of the first and second heated parts while at the first and second hot working temperatures respectively, and subjected to the engagement motion. After shearing, a reworked, fine-grained microstructure is formed in the first heated part 142 and the second heated parts 144A, 144B, securely joining or bonding the first heated part 142 with the respective second heated parts 144A, 144B.

When the fins 134 (after being heated to their hot working temperature) are engaged by the first and second end portions 124A, 124B, the fins 134 are plastically deformed. In one embodiment, as shown in Fig. 5, the fins 134 are bent, and squeezed between the wall segment 133 (of the coupler 120) and the exterior surfaces 154A, 154B of the end portions 124A, 124B such that the plastically deformed fins 134 provide a fluid-tight seal between the wall segment 133 and the exterior surfaces 154A, 154B of the end portions 124A, 124B.

As schematically shown in Fig. 5, the respective end faces 150A, 150B of the end portions 124A, 124B of the pipes 122A, 122B are engaged with each other once the pipes 122A, 122B and the coupler 120 are engaged. Those skilled in the art would appreciate that the end faces 150A, 150B, once pressed together, may not provide a fluid-tight seal. However, in the event that a fluid-tight seal is not created when the end faces 150A, 150B are pressed together (Fig. 5), the fluid-tight seal is provided by the fins 134 that are squeezed against the exterior surfaces 154A, 154B.

As can be seen in Fig. 5, once the pipes 122A, 122B are secured together by the coupler 120, respective interior surfaces 147A, 147B of the pipes 122A, 122B are aligned, or substantially aligned in order to improve fluid flow within the pipes.

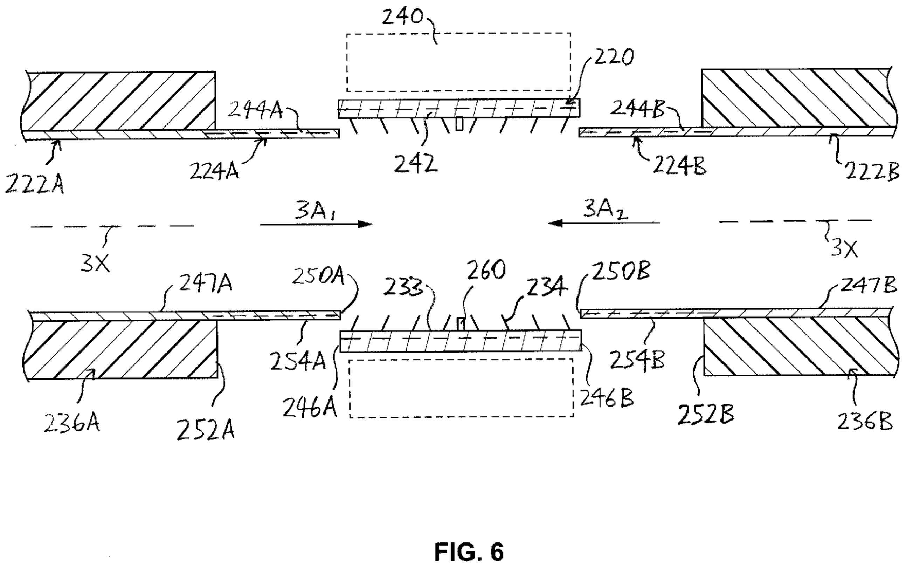

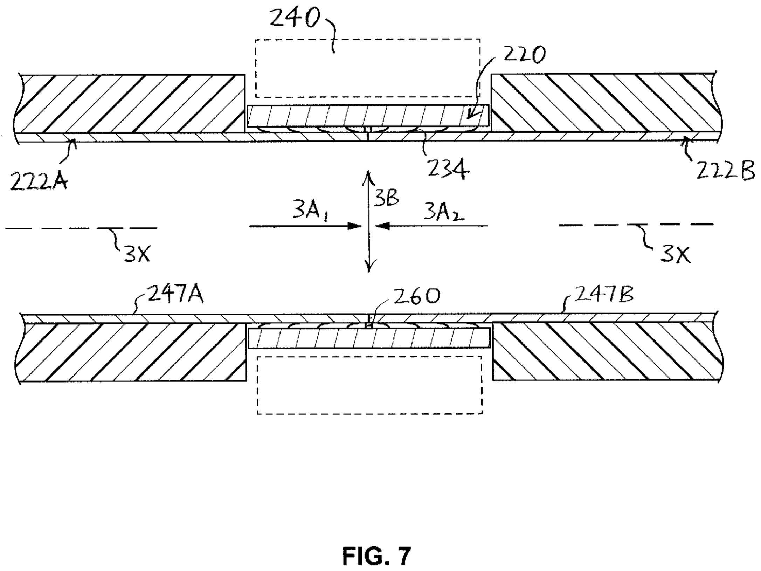

Another embodiment of a coupler 220 is schematically illustrated in Figs. 6 and 7. In this embodiment, the coupler 220 includes an intermediate element 260 that projects from a wall segment 233 of the coupler 220. In the current embodiment, the intermediate element 260 is located at a point that is approximately midway between the mating faces 246A, 246B of the coupler 220. As can be seen in Fig. 6, the coupler 220 is initially positioned between pipes 222A, 222B, for engagement of the coupler 220 with the pipes 222A, 222B. The pipes 222A, 222B have a common axis "3X".

As can be seen in Fig. 6, the coupler 220 also includes a set or number of fins 234 that are mounted to the wall segment 233 or part of the wall segment 233. The wall segment 233 includes an area, which can be seen as a coupler or first heated part 242, which is heated to a hot working temperature by heating elements. End portions 224A, 224B of the pipes 222A, 222B include areas, which can be seen as a pipe or second heated part 244A, 244B, that are heated to a hot working temperature by heating elements. This is described in more detail below.

In use, a first heated part 242 of the coupler 220 and second heated parts 244A, 244B of end portions 224A, 224B of pipes 222A, 222B respectively are heated to their hot working temperatures. In order to heat the heated parts, one or more heating elements 240 are positioned for heating the first heated part 242 and the second heated parts 244A, 244B, in an inert atmosphere, to their respective hot working temperatures. It will be understood that only one of the heating elements 240 is schematically represented in Figs. 6 and 7 for clarity of illustration and that the one or more heating elements 240 may be positioned as described above with respect to the other embodiments or examples. In the current embodiment, the first heated part 242 includes the set of fins 234, the intermediate element 260, and a portion of the wall segment 233.

It will also be understood that the heating element(s) 240 may also be positioned inside the coupler 220 and/or outside the pipes 222A, 222B, or outside one or all of the coupler 220 and the pipes 222A, 222B, depending on whether positioning the heating element(s) 240 inside or outside is practicable.

In the same manner as described above in connection with other embodiments, the heating elements are energized, to heat (such as, but not limited to, by induction) the first 242 and second heated parts 244A, 244B to their respective hot working temperature(s).

Once the first heated part 242 and the second heated parts 244A, 244B are at their respective hot working temperatures, the coupler 220 and/or the pipes 222A, 222B are subjected to translocation motions to bring the coupler 220 into engagement with the end portions 224A, 224B of the pipes 222A, 222B and, on or before engagement, they are also subjected to engagement motions. The directions of the translocation motions of the pipes 222A, 222B are indicated by arrows "3A₁", "3A₂" in Fig. 6.

When the coupler 220 and the end portions 224A, 224B are engaged, the coupler 220 is positioned substantially coaxially relative to the pipes 222A, 222B. The direction of the engagement motion is generally indicated by arrow "3B" (Fig. 7). As an example of an engagement motion, the coupler 220 may, when engaged, be rotated or oscillated (at least partially) about the axis "3X".

In the embodiment illustrated in Figs. 6 and 7, in addition to the set of fins 234 being plastically deformed by engagement with the exterior surfaces 254A, 254B (when at their hot working temperature) and squeezed between the wall segment 233 and the respective exterior surfaces 254A, 254B of the end portions 224A, 224B, the intermediate element 260 is also plastically deformed, so that the intermediate element 260 at least partially fills any small gap (not shown) that may remain between the end faces 250A, 250B of the pipes 222A, 222B after the end faces 250A, 250B are engaged with each other.

In some embodiments, the mating faces 246A, 246B of the coupler 220 do not engage respective composite material end faces 252A, 252B of the composite material 236A, 236B (Fig. 6), once the end faces 250A, 250B are engaged.

In the same manner as described above, the microstructures of the first 242 and second 244A, 244B heated parts are sheared due to the engagement of the first and second heated parts while they are at their respective hot working temperatures. Due to shearing, a reworked, fine-grained microstructure is formed in the first heated part 242 and the second heated parts 244A, 244B, joining or bonding the first heated part 242 with the respective second heated parts 244A, 244B.

As can be seen in Fig. 7, once the pipes 222A, 222B are secured together by the coupler 220, respective interior surfaces 247A, 247B of the pipes 222A, 222B preferably are aligned, or substantially aligned.

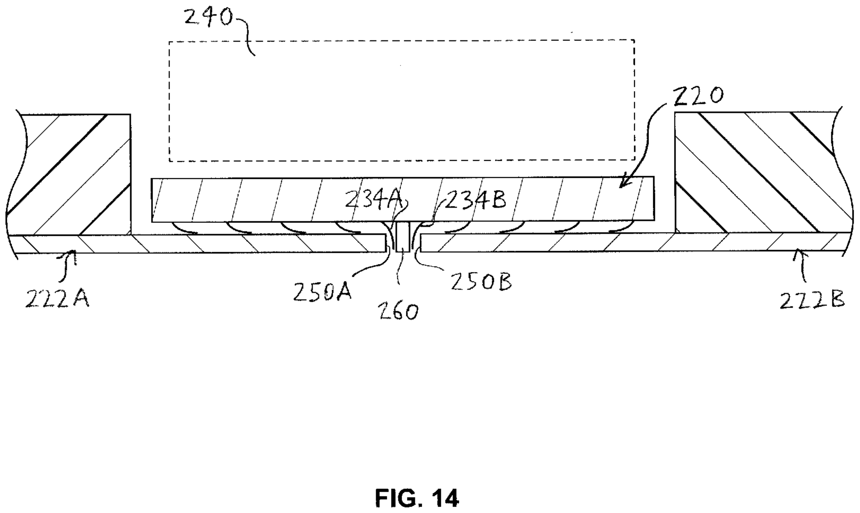

In an alternative embodiment as illustrated in Fig. 14, fins that are proximal to the intermediate element 260 may be somewhat longer than the other fins. In Fig. 14, the somewhat longer fins that are proximal to the intermediate element 260 are identified for convenience by reference characters 234A and 234B. It is understood that there may be more or less than two somewhat longer fins based on the size and shape of the coupler 220 and pipes 222A, 222B. It will be understood that the width of the intermediate element 260 is exaggerated in Fig. 14, for clarity of illustration.

In Fig. 14, the pipes 222A, 222B are shown shortly before the end faces 250A, 250B are engaged with each other and/or the intermediate element 260.

As can be seen in Fig. 14, when the pipes 222A, 222B are pushed together (in response to the translocation motion, the fins 234A, 234B are pushed against the intermediate element 260 resulting in the fins 234A, 234B and the intermediate element 260 being squeezed between the end faces 250A, 250B of the respective pipes 222A, 222B, to reduce the likelihood of or prevent a presence of openings between the end faces 250A, 250B after the pipes are pushed together.

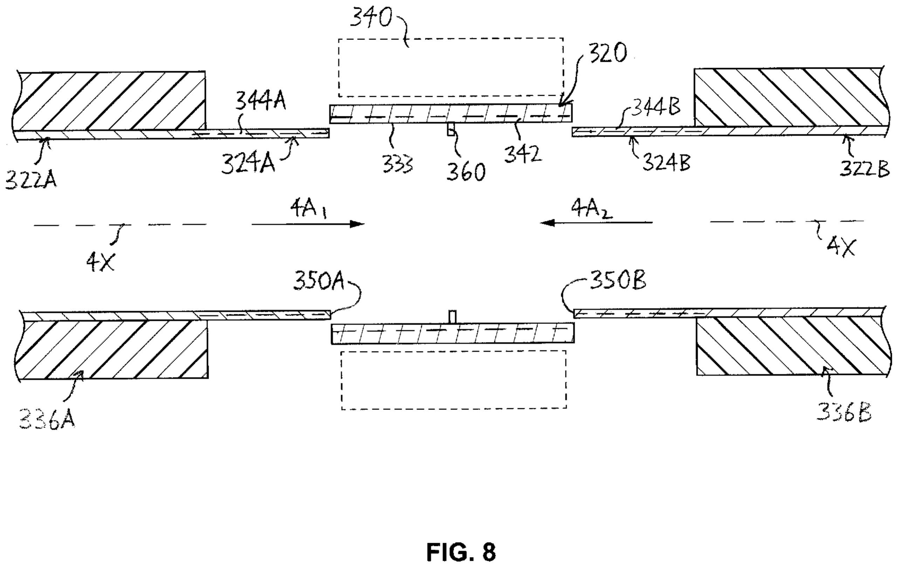

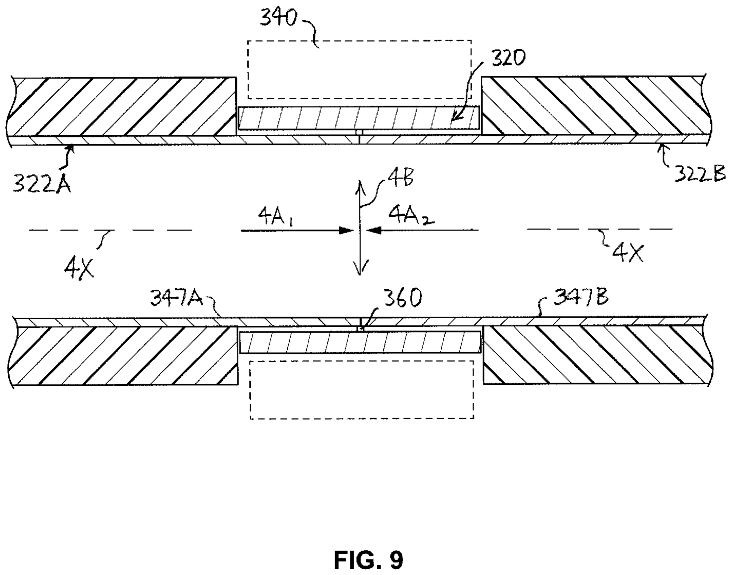

Another alternative embodiment of the disclosure is illustrated in Figs. 8 and 9. In this embodiment, a coupler 320 includes an intermediate element 360 mounted to a wall segment 333. Unlike previous embodiments, in the current embodiment, the coupler 320 does not include fins. As can be seen in Fig. 9, when the coupler 320 is engaged with end portions 324A, 324B of pipes 322A, 322B, the coupler 320 and the pipes 322A, 322B are positioned coaxially relative to each other. The axis is identified in Fig. 8 by reference character "4X". Composite material 336A, 336B is positioned on outer surfaces 335A, 335B of the respective pipes 322A, 322B.

One or more heating elements 340 are provided, to heat a first heated part 342 of the coupler 320 and second heated parts 344A, 344B of the pipes 322A, 322B to their respective hot working temperatures at which the first heated part 342 and the second heated parts 344A, 344B are plastically deformable. As can be seen in Fig. 8, the first heated part 342 includes the intermediate element 360.

Although not shown, there may be other heating elements for heating the first heated part 342, and the second heated parts 344A, 344B beyond the single heating element 340 shown in Figs. 8 and 9. It will be understood that only one heating element is shown in Figs. 8 and 9 for clarity of illustration.

While the first heated part 342 and the second heated parts 344A, 344B are at their respective hot working temperatures, one or both of the pipes 322A, 322B preferably are may be subjected to a translocation motion, as indicated by arrows "4A₁" and "4A₂" towards the coupler 320. The pipes 322A, 322B have end faces 350A, 350B that are engaged, abutting each other, when the first heated part 342 and the second heated parts 344A, 344B are engaged since the intermediate element 360 is plastically deformed when heated to its hot working temperature. The intermediate element 360, while at its hot working temperature and therefore subject to plastic deformation, is pushed into any openings between the end faces 350A, 350B that are engaged with each other when the first heated part 342 is engaged with the second heated parts 342A, 324B.

Once the first heated part 342 and the second heated parts 344A, 344B are at their respective hot working temperatures, the second heated parts 322A, 322B are engaged with the first heated part 342, due to the translocation motion. Before or after engagement, the coupler 320 and/or the pipe 322A, and the coupler 320 and/or the pipe 322B, are moved relative to each other, in one or more engagement motions. The engagement motion is schematically represented in Fig. 9 by arrows "4B".

In some embodiments, while one or all of the coupler 320 and the first and second pipes 322A, 322B are subjected to the engagement motion, the pipes 322A, 322B are urged in the directions indicated by arrows "4A₁", "4A₂" respectively.

As described above, the microstructures of the first 342 and second heated parts 344A, 344B are sheared due to the engagement of the first and second heated parts while they are at the first and second hot working temperatures respectively. Due to shearing, a reworked, fine-grained microstructure is formed in the first heated part 342 and the second heated parts 344A, 344B, joining or bonding the first heated part 342 with the respective second heated parts 344A, 344B.

As can be seen in Fig. 9, once the pipes 322A, 322B are secured together by the coupler 320, respective interior surfaces 347A, 347B of the pipes 322A, 322B are aligned or substantially aligned.

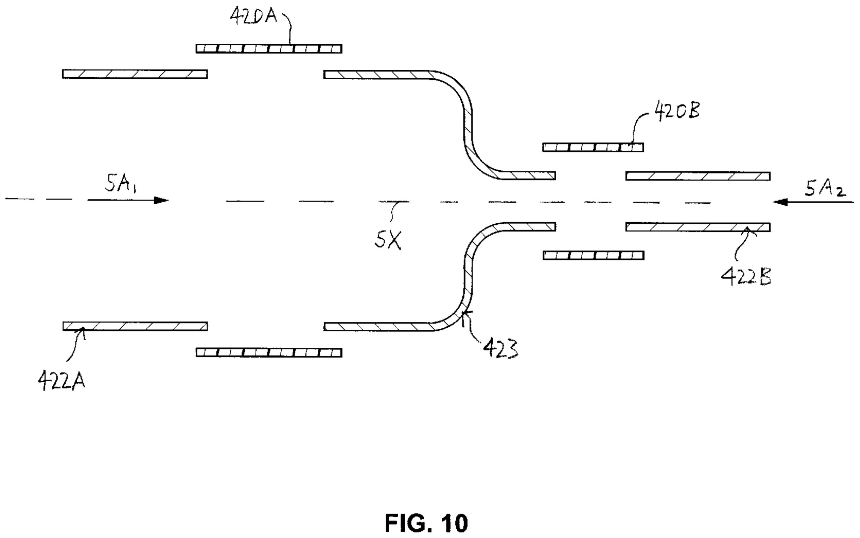

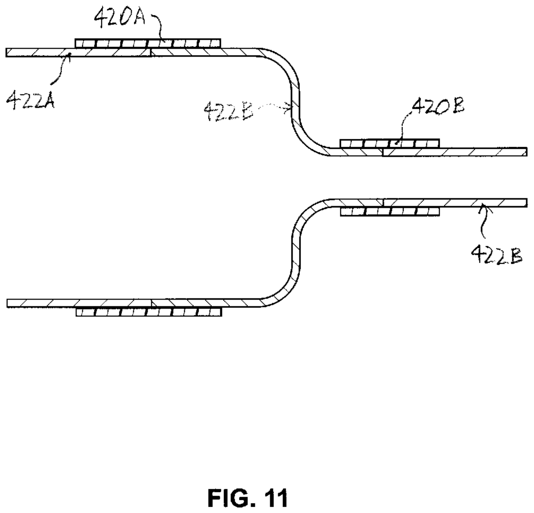

As can be seen in Figs. 10 and 11, in another embodiment, couplers 420A and 420B are utilized to join pipes 422A, 422B that have different diameters. In the example illustrated in Figs. 10 and 11, the pipes 422A, 422B have different diameters (inner and outer). In order to join pipes with different diameters, an intermediate pipe 423 is positioned between the pipes 422A, 422B. As schematically shown in Fig. 10, the pipes 422A, 422B, 423 are initially positioned coaxially, relative to an axis "5X", and spaced apart.

It will be understood that the couplers 420A, 420B may include fins and/or intermediate elements (although they are not shown in Figs. 10 and 11). It will also be understood that, in the same manner as described above, each of the pipes 422A, 422B, 423 include areas, seen as pipe heated parts or second heated parts, that are heated by energized heating elements (not shown) in Figs. 10 and 11 to hot working temperatures, in inert atmospheres. Similarly, respective areas, seen as first heated parts or coupler heated parts, (not shown in Figs. 10 and 11) of the couplers 420A, 420B are heated to hot working temperatures, in inert atmospheres.

It will also be understood that, prior to engagement, the couplers are positioned coaxial or substantially coaxial, to the pipes adjacent thereto. In Fig. 10, the couplers are shown radially spaced apart from the pipes to which they are adjacent by exaggerated distances, for clarity of illustration.

Once the heated parts of coupler 420A and pipes 422A, 423 are heated to their respective hot working temperatures, one or both of the pipes 422A, 423 are moved to push against each other (i.e., they are subjected to a translocation motion), and the heated part of the coupler 420A is engaged with the heated parts of the pipes 422A, 423. In Fig. 10, for example, the pipe 422A may be moved (i.e., subjected to a translocation motion) in the direction indicated by arrow "5A₁" to engage the intermediate pipe 423. Once engaged, the coupler 420A and/or the pipes 422A, 423 are subjected to an engagement motion, e.g., rotation or oscillation, at least partly around the axis "5X" (Fig. 10).

Similarly, once the heated parts of coupler 420B and pipes 422B, 423 are heated to their respective hot working temperatures, one or both of the pipes 422B, 423 are moved to push against each other (i.e., they are subjected to a translocation motion), and the coupler 420B is engaged with the pipes 422B, 423. Once engaged the coupler 420B and/or the pipes 422B, 423 are subject to an engagement motion, e.g., rotation or oscillation, at least partly around the axis "5X". Similarly, the pipe 422B may be moved in the direction indicated by arrow "5A₂" to engage the intermediate pipe 423.

In the same manner as described above, as schematically shown in Fig. 11, the result is that the coupler 420A is joined with, and secures together, the pipes 422A, 423 and the coupler 420B is joined with, and secures together, the pipes 422B, 423.

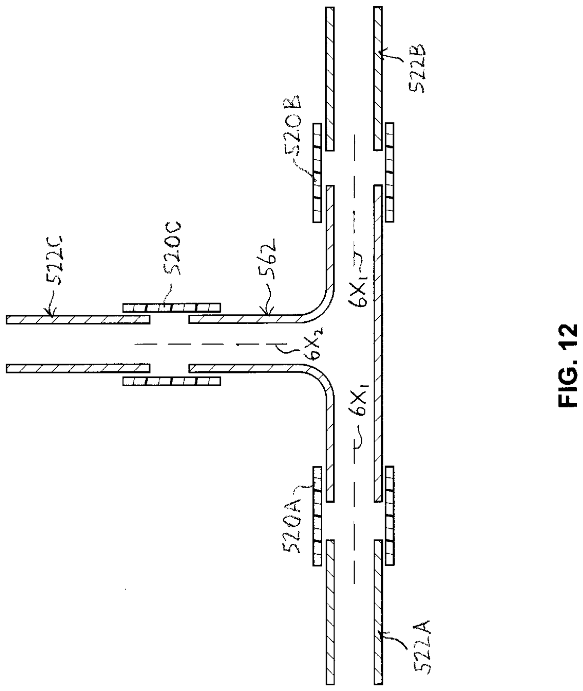

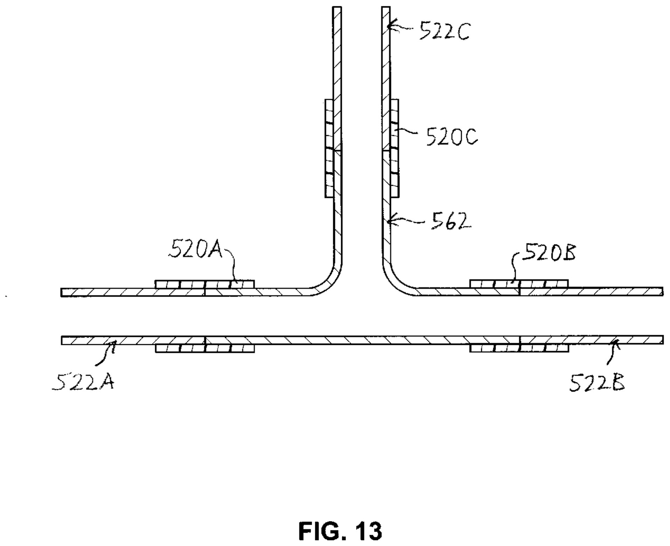

Another embodiment of the disclosure is illustrated in Figs. 12 and 13, in which a preformed tee fitting 562 is positioned for engagement with pipes 522A, 522B, and 522C positioned to be joined therewith. As illustrated in Fig. 12, the fitting 562 defines a first axis "6X₁" and a second axis "6X₂".

The pipes 522A, 522B are positioned coaxial with the first axis "6X₁", and the pipe 522C is positioned coaxial with the second axis "6X₂".

Although not shown, couplers 520A, 520B, 520C may include fins and/or intermediate elements. **It** will also be understood that, in the same manner as described above, predetermined pipe or second heated parts or areas of the pipes 522A, 522B, 522C, and predetermined fitting heated parts or areas of the fitting 562, are heated by energized heating elements (not shown) to their hot working temperatures, in inert atmospheres. Similarly, predetermined first or coupler heated parts or areas of the couplers 520A, 520B, 520C are heated to their hot working temperatures, in inert atmospheres.

Once the heated parts of couplers 520A, 520B, pipes 522A, 522B and the parts of tee 562 engaging with pipes 522A, 522B are heated to their hot working temperatures, the pipes 522A, 522B are moved to push or engage against the fitting 562 (i.e., they are subjected to a translocation motion), and the couplers 520A, 520B are engaged with the pipes 522A, 522B, and the respective parts of the fitting 562 with which the pipes 522A, 522B are engaged. Preferably, the couplers 520A, 520B are also subjected to an engagement motion, e.g., rotation or oscillation, at least partly around the axis "6X₁" (Fig. 12).

Similarly, once the heated parts of the coupler 520C, the pipe 522C and the portion of the tee 562 engaging with pipe 522C are heated to their hot working temperatures, the pipe 522C is moved to push against the fitting 562 (i.e., the pipe 522C is subjected to a translocation motion), and the coupler 520C is engaged with the pipe 522C and the part of the fitting 562 with which the pipe 522C is engaged. Preferably, the coupler 520C is also subjected to an engagement motion, e.g., rotation or oscillation, at least partly around the axis "6X₂" (Fig. 12).

**In** the same manner as described above, as schematically shown in Fig. 13, the result is that the coupler 520A is joined with, and secures together, the pipe 522A and the fitting 562, the coupler 520B is joined with, and secures together, the pipe 522B and the fitting 562 and the coupler 522C is joined with, and secures together, the pipe 522C and the fitting 562.

**It** will be appreciated by those skilled in the art that the invention can take many forms, and that such forms are within the scope of the invention as claimed. The scope of the claims should not be limited by the preferred embodiments set forth in the examples, but should be given the broadest interpretation consistent with the description as a whole.

## Claims

1. A method comprising:
heating a coupler heated part of a coupler to a first hot working temperature in an inert atmosphere;
heating a pipe heated part of a pipe to a second hot working temperature in the inert atmosphere; and
subjecting one or both of the coupler and the pipe to a translocation motion and an engagement motion to engage the coupler heated part of the coupler and the pipe heated part of the pipe.

2. The method of claim 1, further comprising providing at least one pipe including an end portion at an end thereof, and providing a coupler having a body with a main portion and an engagement portion formed to fit over the end portion, the body including a plurality of fins positioned on the engagement portion.

3. The method of claim 1 or 2, further comprising providing an inert atmosphere covering the coupler and the end portion.

4. The method of any preceding claim, wherein the heating is performed by energizing at least one heating element.

5. The method of any preceding claim, wherein the translocation motion moves the engagement portion onto the end portion.

6. The method of any preceding claim, wherein the engagement motion involves one or both of the coupler and the at least one pipe moving radially relative to the other.

7. The method of any preceding claim, further comprising urging the coupler against the end portion, to join the coupler to the at least one pipe.

8. The method of any preceding claim wherein heating a coupler heated part of a coupler to a first hot working temperature in an inert atmosphere comprises:
heating a set of fins to the first hot working temperature in the inert atmosphere.

9. The method of any preceding claim wherein heating a coupler heated part of a coupler to a first hot working temperature in an inert atmosphere comprises:
heating an intermediate component to the first hot working temperature in the inert atmosphere.

10. The method of any preceding claim wherein the engagement motion comprises a rotational motion.

11. The method of claim 4, wherein energizing the at least one heating element comprises heating by induction.

12. A coupler for use in joining pipe comprising:
a main body portion; and
an engagement portion;
wherein the engagement portion includes a coupler heated part which is heated to a first hot working temperature for engaging the engagement portion with the pipe.

13. The coupler of Claim 12 wherein the engagement portion further comprises a set of fins.

14. The coupler of Claim 12 or 13 wherein the engagement portion further comprises an intermediate component.

15. The coupler of any one of claims 12 to 14, wherein the main body portion includes a pocket or notch proximate the main portion mating face, configured to receive an end face of a pipe and reduce flash.
